# EUROPEAN PATENT SPECIFICATION

(11) **EP 2 502 816 B1**
(45) Date of publication and mention of the grant of the patent: **08.06.2016**
(21) Application number: 12159403.0
(22) Date of filing: 14.03.2012
(51) Int. Cl.: B62K 19/30, B62K 11/10

(54) **Frame structure of saddle-ride type vehicle**
Rahmenstruktur für ein Sattelfahrzeug
Structure de cadre pour véhicule à monture de selle

(30) Priority: 25.03.2011 JP 2011068169
(43) Date of publication of application: 26.09.2012
(73) Proprietor: Honda Motor Co., Ltd., Tokyo 107-8556 (JP)
(72) Inventor: Yokouchi, Kohei, Wako-shi, Saitama 351-0193 (JP); Maruyama, Tomoyuki, Wako-shi, Saitama 351-0193 (JP); Okubo, Katsuyuki, Wako-shi, Saitama 351-01963 (JP); Nagayama, Masashi, Wako-shi, Saitama 351-0193 (JP)
(74) Representative: Stevens, Jason Paul

(56) References cited:
- WO-A1-2010/013482
- JP-B2- 4 249 331
- US-A1- 2010 243 353

## Description

The present invention relates to a frame structure of a saddle-ride type vehicle provided with a bracket supporting the swing unit.

A frame structure of a saddle-ride type vehicle which enhances the rigidity by connecting frames constituting a body frame with brackets is well known (see, for example, Japanese Patent Publication No. 4249331). A further form of frame structure is shown in US 2010/0243353, on which the preamble of claim 1 is based.

In the frame structure of the saddle-ride type vehicle according to Japanese Patent Publication No. 4249331, frames are connected near the longitudinal centre of the vehicle by a bracket. In addition, a swing arm for holding the rear wheel is swingably supported on the body frame via a pivot shaft of the bracket.

In the above prior art, however, in case of a swing unit in which a swing arm and an engine (power unit) is integrally provided, the weight of the swing unit is heavier than that of a swing arm which is not provided with an engine. Accordingly, a bracket supporting the swing unit requires high rigidity. Therefore, due to the fact that the frame is increased in size by providing a reinforcing member or thickening the wall thickness of the frame or the bracket in order to enhance the rigidity, the weight of the body frame may increase in weight.

It is an object of at least the preferred embodiments of the present invention to provide a frame structure of a saddle-ride type vehicle which can suppress the increase in weight of a body frame while ensuring the rigidity of the body frame.

According to a first aspect of the invention, there is provided a frame structure of a saddle-ride type vehicle comprising: a head pipe; upper frames which extend rearward and downward from said head pipe; down frames which are disposed below said upper frames and extend rearward and downward from said head pipe; under frames which extend rearward from the lower end of said down frames; rear frames which extend rearward and upward from the lower portion of said upper frames; and a swing unit which has a power unit for generating a driving force and rotatably holds a rear wheel; characterized in that the frame structure further comprises pivot brackets which connect the lower portion of said upper frames and the rear portion of said under frames, in that said pivot brackets are joined to the forward surface of said upper frames along the direction in which said upper frames extend, in that each pivot bracket includes a pivot bracket outer portion and a pivot bracket inner portion which are jointed to the under frame by being welded with a front joint portion along the circumferential direction of the under frame at the rear portion of the under frame, and in that said that swing unit is swingably supported by said pivot brackets.

The pivot bracket supporting the swing unit is joined to the forward surface of the lower end of the upper frame along the direction in which this part of the upper frame extends. Accordingly, it is possible to increase the size of the jointed area between the pivot bracket and the upper frame. In this way, it is possible to ensure the rigidity of the pivot brackets without increasing the size of the frame and the pivot brackets, which thereby can suppress the increase in weight of the body frame while ensuring the rigidity of the body frame.

Preferably, said rear frames are joined to the rear sides of the lower portions of said upper frames to which said pivot brackets are connected.

With this arrangement, it is possible to further enhance the rigidity of the lower portions of the upper frames, which is increased by the pivot brackets, and thus further enhance the rigidity of the body frame.

In a preferred form, a sub-bracket for connecting the rearward surface of the lower portion of one said upper frame and the lower surface of the front portion of one said rear frame is further provided; and said sub-bracket is joined to said one upper frame along the direction in which said one upper frame extends and is joined to said one rear frame along the direction in which said one rear frame extends.

With this arrangement, it is possible to increase the size of the jointed area between the sub-bracket and the upper frame and also to increase the size of the jointed area between the sub-bracket and the rear frame. Consequently, it is possible to further enhance the rigidity of the body frame.

Preferably, the frame structure further comprises a link member, one end of which is supported by said swing unit and the other end of which is supported by said sub-bracket and restricts the motion in the longitudinal direction of said swing unit.

By means of this configuration, it is possible to restrict the motion in the longitudinal (front-and-rear) direction of the swing unit by using the sub-bracket.

A preferred embodiment of the invention will now be described by way of example only and with reference to the accompanying drawings, in which:
FIG. 1 is a left side view showing the frame structure of a scooter type motorcycle as an example of a saddle-ride type vehicle according to an embodiment of the present invention;
FIG. 2 is an enlarged left side view of the frame structure of the motorcycle shown in Fig. 1;
FIG. 3 is a perspective view showing pivot brackets and a sub-bracket in the frame structure of the motorcycle shown in Fig. 1;
FIG. 4 is a perspective view showing the constitution of a link mechanism of the motorcycle shown in Fig. 1; and
FIG. 5 is a perspective view showing the arrangement for restricting the motion in the front-and-rear direction of the link mechanism of the motorcycle shown in Fig. 1.

Hereinafter, an embodiment for the frame structure of the motorcycle will be described with reference to drawings, in case where a saddle-ride type vehicle according to the present invention is applied to a scooter type motorcycle. The directions of front, rear, left, right, up and down in the description below are, unless otherwise stated, those seen from a passenger (rider) riding on the motorcycle. In the drawing, an arrow FR shows the front (travelling direction), an arrow UP shows the upwards direction, and an arrow LH shows the left of the vehicle body as seen from the travelling direction, respectively.

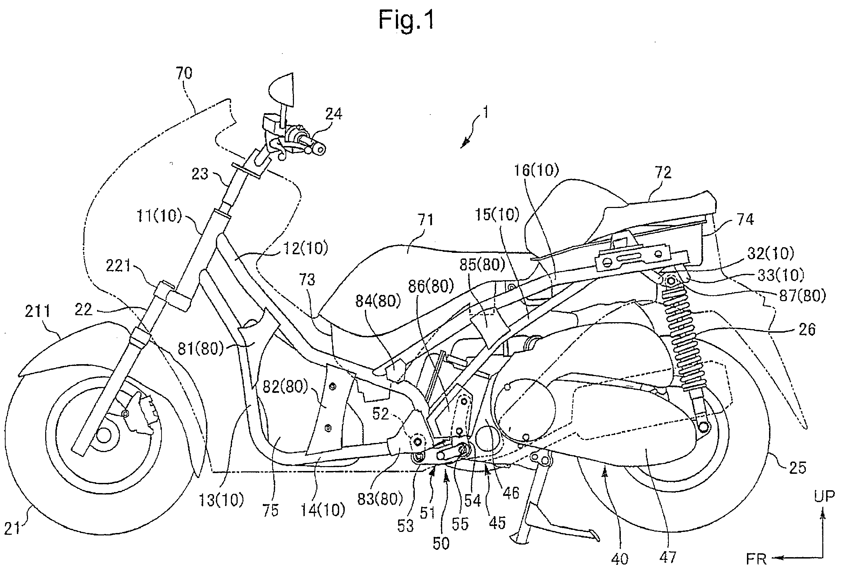

First, referring to Fig. 1, the overall configuration of a motorcycle 1 of the embodiment of the present invention will be described. Fig. 1 is a left side view showing the frame structure of a scooter type motorcycle as an example of a saddle-ride type vehicle according to an embodiment of the present invention.

As shown in Fig. 1, the motorcycle 1 mainly comprises a body frame 10, a front wheel 21, a front fender 211 disposed above the front wheel 21, a pair of left and right front forks 22 for supporting the front wheel 21, a steering stem 23 rotatably supporting the front forks 22 in the left-and-right direction with respect to a head pipe 11 via a bottom bridge 221, a handlebar 24 which is connected to the upper end of the steering stem 23 and steers the front wheel 21, a rear wheel 25, a swing unit 40 pivotally supporting the rear wheel 25 on the rear end side thereof, a link mechanism 51 (a link member) which is interposed between the swing unit 40 and the body frame 10 substantially in the longitudinal centre of the vehicle body, rear cushions 26 which are interposed between the swing unit 40 and the body frame 10 in the rear of the vehicle body, a front seat 71 on which a rider sits, a rear seat 72 on which a pillion passenger sits, a cover member 70 for covering each portion of the vehicle body, a front storage box 73, a rear storage box 74 and a fuel tank 75.

The body frame 10 is configured such that several members are integrally connected by welding. The body frame 10 comprises the head pipe 11, upper frames 12, down frames 13, under frames 14, rear frames 15, seat rails 16, a plurality of cross members (a first cross pipe 32, a second cross pipe 33 and the like), and fastening brackets 80.

A frame structure 50 of the motorcycle 1 mainly comprises a pair of the upper frames 12, a pair of the down frames 13, a pair of the under frames 14, a pair of the rear frames 15, the swing unit 40, pivot brackets 83 and a sub-bracket 86.

The head pipe 11 is disposed at the front portion of the body frame 10.

The upper frames 12 are provided as a left and right pair. Each of the upper frames 12 is connected to the head pipe 11, and extends extend obliquely rearward and downward.

The down frames 13 are provided as a left and right pair. The down frames 13 are disposed below the upper frames 12. Each of the down frames 13 is connected to the head pipe 11, and extends from the head pipe 11 obliquely rearward and downward.

The under frames 14 are provided as a left and right pair. The front end portions of each of the under frames 14 are connected to the lower ends of the down frames 13. The rear end portions of the under frames 14 extend rearward from the down frames 13.

The seat rails 16 are provided as a left and right pair, and are provided below the front seat 71 and the rear seat 72. One pair of ends of the seat rails 16 are connected to the vicinity of the longitudinal middle portion of the upper frames 12, and the seat rails 16 extend rearward from this connection.

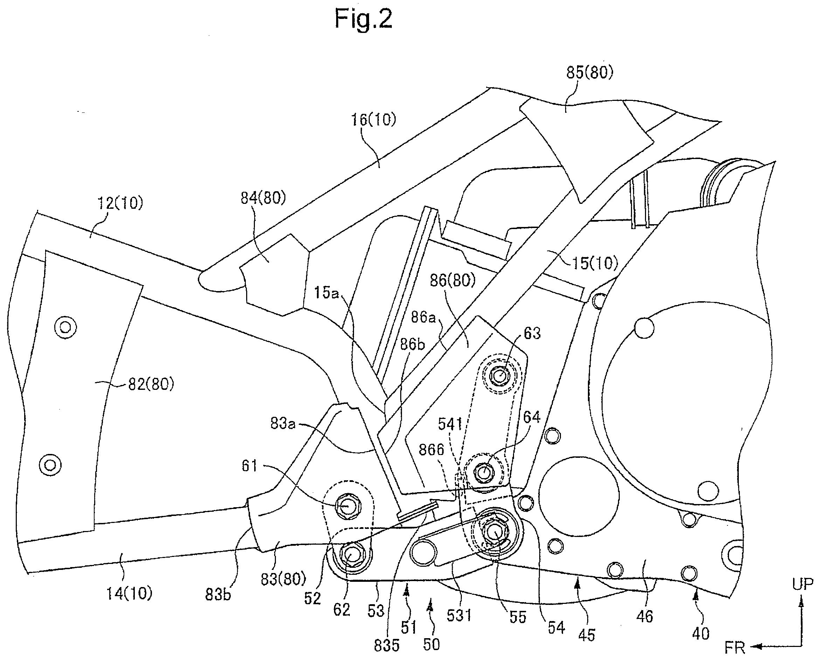

The rear frames 15 are provided as a left and right pair. One pair of ends of the rear frames 15 are connected to the lower portions of the upper frames 12. More specifically, the pair of ends of the rear frames 15 are jointed on the rear sides of the lower portions of the upper frames 12 to which the pivot brackets 83 (which will be described later), are connected by being welded at a joint portion 15a (see Fig. 2). The rear frames 15 extend obliquely rearward and upward, and are connected to the rear portions of the seat rails 16.

The cross members are made up of pipe members extending laterally and connect the a pair of left and right upper frames 12, down frames 13, under frames 14, rear frames 15 and seat rails 16 in the lateral direction. The cross members include a pair of cross pipes 32, 33.

The pair of cross pipes 32, 33 connect the rear portions of the pair of seat rails 16 in the lateral direction. The cross pipes 32, 33 are provided so as to be longitudinally spaced from each other with a predetermined distance.

The fastening brackets 80 are designed to enhance the rigidity of the body frame 10 by reinforcing the body frame 10, and are attached to each portion of the body frame 10.

The fastening brackets 80 include first front brackets 81, second front brackets 82, the pivot brackets 83, first rear brackets 84, second rear brackets 85, the sub-bracket 86 and upper end support brackets 87.

The first front brackets 81 are provided as a left and right pair. Each of the first front brackets 81 connects the lower side of the front portion of an upper frame 12 and the rear side of the centre of a down frame 13.

The second front brackets 82 are provided as a left and right pair. Each of the second front brackets 82 connects the lower side of the centre of an upper frame 12 and the upper side of the centre of an under frame 14.

The pivot brackets 83 are provided as a left and right pair. Each of the pivot brackets 83 connects the front side of the lower portions of an upper frame 12 and the rear side of an under frame 14, respectively. Each of the pivot brackets 83 is jointed to an upper frame 12 along the direction in which the upper frame 12 extends.

The pivot brackets 83 will be described in detail later.

The first rear brackets 84 are provided as a left and right pair. Each of the first rear brackets 84 connects the upper side of a rear portion of an upper frame 12 and the lower side of a front portion of a seat rail 16.

The second rear brackets 85 are provided as a left and right pair. Each of the second rear brackets 85 connects the lower side of a seat rail 16 and the upper side of the centre of a rear frame 15.

The sub-bracket 86 is disposed on the left side of the vehicle body. The sub-bracket 86 connects the rear side of the lower portion of the left upper frame 12 and the lower side of the front portion of the left rear frame 15. The sub-bracket 86 is jointed to the left upper frame 12 along the direction in which the left upper frame 12 extends, and is joined to the left rear frame 15 along the direction in which the left rear frame 15 extends.

The sub-bracket 86 will be described in detail later.

The upper end support brackets 87 connect the cross pipes 32, 33, and support the upper end portion of the rear cushion 26. The upper end support brackets 87 are provided in a pair so as to be laterally spaced apart from each other:

The swing unit 40 is swingably supported by the body frame 10. The front side of the swing unit 40 is swingably supported via the link mechanism 51, which will be described later, and the rear end portion thereof is supported by the body frame 10 via the rear cushion 26. Further, the swing unit 40 rotatably holds the rear wheel 25 on the rear side thereof.

The swing unit 40 is configured such that an engine 45 and a power transmission mechanism 47 are integrally provided.

The engine 45 is a power unit for generating a driving force of the motorcycle 1, and is mounted generally longitudinally centrally in the vehicle body. The engine 45 has a crankcase 46 on the rear portion side thereof, and is connected to a first pivot shaft 55 of the link mechanism 51, which will be described later, on the lower end of the front portion of the crankcase 46.

The power transmission mechanism 47 is designed to transfer the driving force of the engine 45 to the rear wheel 25. The power transmission mechanism 47 is disposed on the rear portion side of the engine 45, and constitutes the swing unit 40 along with the engine 45 by being attached to the engine 45. The power transmission mechanism 47 is disposed on the left side of the vehicle body. The power transmission mechanism 47 includes a belt-type continuously-variable transmission or CVT (not shown).

The belt-type CVT mainly comprises a drive pulley (not shown) which is connected to the crank shaft as the output shaft of the engine 45, a driven pulley (not shown) which is connected to the axle for the rear wheel, and a V-belt (not shown) which is wound around the drive pulley and the driven pulley. The belt-type CVT controls the transmission gear ratio by continuously changing the winding and the diameter of the V-belt with respect to the drive pulley and the driven pulley.

The link mechanism 51 is designed to allow the swing unit 40 to swing in the vertical and longitudinal directions and to absorb impact loads imposed on the rear wheel 25 from the road surface. The link mechanism 51 is supported by the swing unit 40.

The link mechanism 51 will be described in detail later.

The rear cushions 26 absorb the impact load imposed on the rear wheel 25 from the road surface with the buffer action thereof. The rear cushions 26 are provided as a left and right pair. The upper end portions of each of the rear cushions 26 are connected to the upper end support brackets 87. The lower end portions of the rear cushions 26 are connected to the rear end portion of the swing unit 40.

The rear cushion 26 extends so as to be in a straight line connecting the upper end support bracket 87 and the rear end portion of the swing unit 40. The rear cushions 26 are provided in a state where the compressed area (stroke) is ensured. The rear cushions 26 are inclined in the stroke direction in which the rear cushions 26 are compressed. The rear cushions 26 are inclined so as to extend rearward to the lower direction.

The front storage box 73 and the rear storage box 74 are boxes for storing a helmet, luggage and the like. The front storage box 73 and the rear storage box 74 are disposed along the seat rails 16 below the front seat 71 and the rear seat 72.

The front storage box 73 is provided between the seat rails 16 substantially in the longitudinal centre of the vehicle body. The front storage box 73 is supported by the seat rails 16.

The rear storage box 74 is provided between the seat rails 16 behind the front storage box 73. The rear storage box 74 is supported by the seat rails 16.

The front seat 71 is a seat on which a rider sits during travelling of the motorcycle, and is disposed above the front storage box 73. The front seat 71 is constructed so as to be capable of opening and closing the opening of the front storage box 73, and functions also as a lid member of the front storage box 73.

The rear seat 72 is a passenger seat on which a pillion passenger sits during travelling of the motorcycle, and is disposed behind the front seat 71 and above the rear storage box 74. The rear seat 72 is constructed so as to be capable of opening and closing the opening of the rear storage box 74, and functions also as a lid member of the rear storage box 74.

The cover member 70 comprises a front cover for covering the upper of the front of the handlebar 24 and the front wheel 21, a centre cover for covering both sides of the front portion of the body frame 10, a rear cover for covering the rear portion of the vehicle body and the upper part of rear wheel 25 and an under cover for covering both sides of the lower portion of the body frame 10.

The fuel tank 75 is held by the down frames 13 and the under frames 14 on the lower side of the upper frames 12.

Next, referring to Figs. 1 to 4, the frame structure 50 which is characteristic of the preferred embodiment of the present invention will be described in detail.

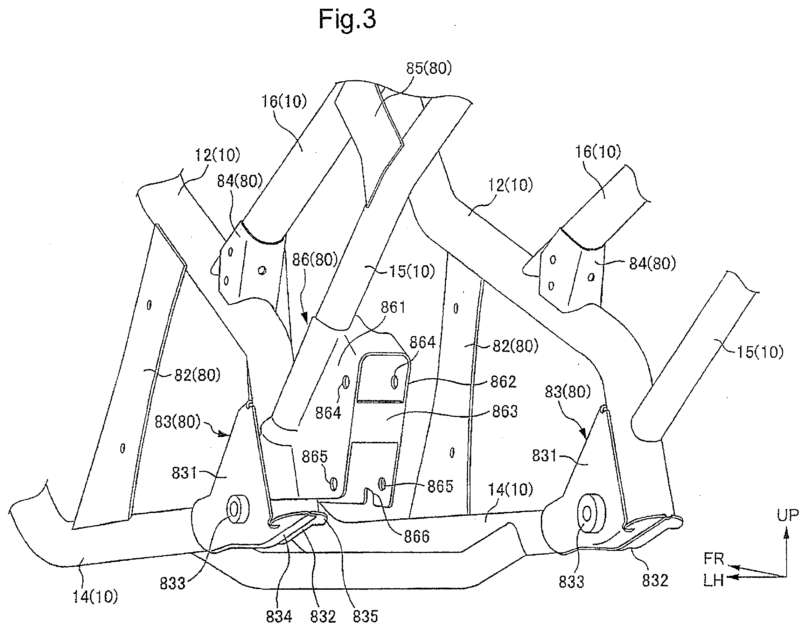

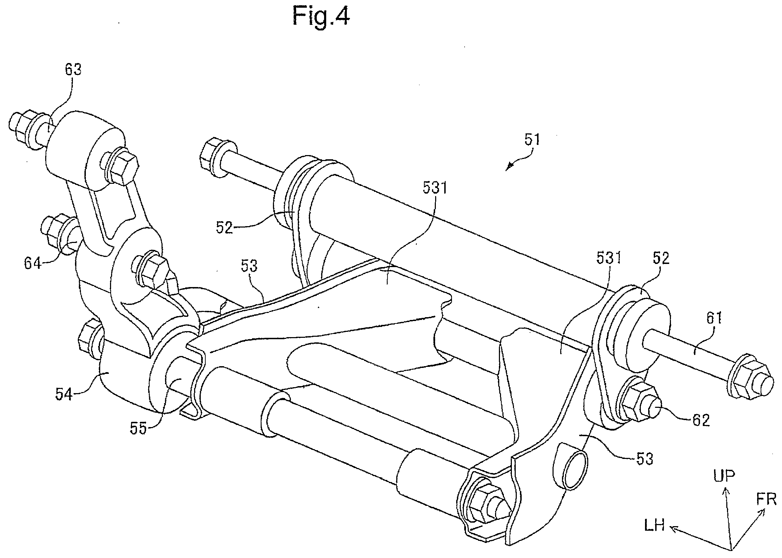

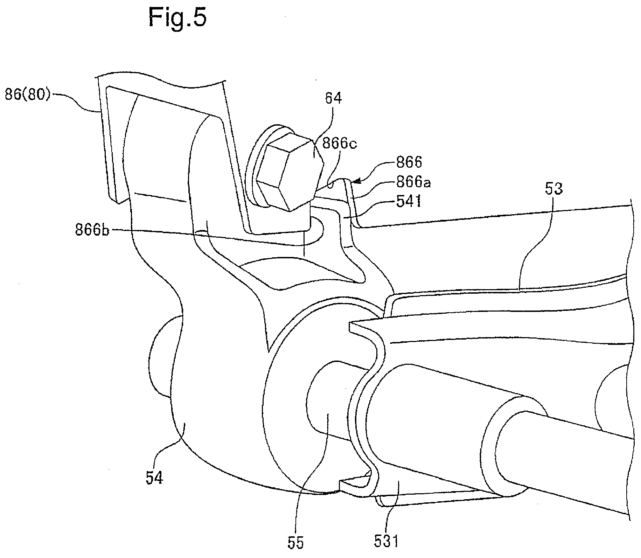

FIG. 2 is an enlarged left side view of the frame structure of the motorcycle shown in Fig. 1. FIG. 3 is a perspective view showing the pivot brackets and the sub-bracket in the frame structure of the motorcycle shown in Fig. 1. FIG. 4 is a perspective view showing the constitution of the link mechanism of frame structure of the motorcycle shown in Fig. 1. FIG. 5 is a perspective view showing the constitution for restricting the motion in the front-and-rear direction of the link mechanism of the frame structure of the motorcycle shown in Fig. 1.

As described above, the frame structure 50 mainly comprises a pair of the upper frames 12, a pair of the down frames 13, a pair of the under frames 14, a pair of the rear frames 15, the swing unit 40, the pivot brackets 83 and the sub-bracket 86.

As described above, the pivot brackets 83 are provided as a left and right pair, as shown in Figs. 2 and 3. The pivot brackets 83 connect the front sides of the lower portions of the upper frames 12 and the rear portions of the under frames 14.

As shown in Fig 3, each pivot bracket 83 is mainly made up of plate members, and end portions thereof are welded together at a lower surface joint portion 834 on the lower surface thereof along the longitudinal (front-and-rear) direction. As shown in Fig. 2, the upper side portion of a first link 52 of the link mechanism 51, which will be described later, is supported inside the pivot bracket 83.

As shown in Fig 3, each of the pivot brackets 83 has a pivot bracket outer portion 831, a pivot bracket inner portion 832 and a pivot bracket cylindrical body 833. The pivot bracket outer portion 831 is disposed on the outer side of each of the pivot brackets 83 in the lateral direction. The pivot bracket inner portion 832 is disposed on the inner side of each of the pivot brackets 83 in the lateral direction.

The pivot bracket outer portion 831 and the pivot bracket inner portion 832 are disposed opposed to each other in the lateral direction, and laterally sandwich the rear portion of the under frame 14 and the lower portion of the upper frame 12. The lower side of each of the pivot brackets 83 is jointed together such that the pivot bracket outer portion 831 and the pivot bracket inner portion 832 are welded with each other at the lower surface joint portion 834.

The lower portion of each of the pivot brackets 83 including the lower surface joint portion 834 is configured as an extending portion 835 extending toward the rear side. The extending portion 835 is disposed on the lower side of the upper frame 12, and functions as a bottom plate of the upper frame 12.

The pivot bracket outer portion 831 and the pivot bracket inner portion 832 are jointed to the front of each of the upper frames 12 by being welded along the direction in which the upper frame 12 extends with a rear joint portion 83a so as to cover the upper frame 12 from the front on the front side of the lower portion of the upper frame 12. The pivot bracket outer portion 831 and the pivot bracket inner portion 832 are jointed to each of the under frames 14 by being welded with a front joint portion 83b along the circumferential direction of the under frame 14 at the rear portion of the under frame 14.

The pivot bracket cylindrical body 833 extends in the lateral direction. The pivot bracket cylindrical body 833 extends between the pivot bracket outer portion 831 and the pivot bracket inner portion 832, and is disposed so as to penetrate the pivot bracket outer portion 831 and the pivot bracket inner portion 832 in the lateral direction.

The pivot bracket cylindrical body 833 is jointed to the pivot bracket outer portion 831 and the pivot bracket inner portion 832 by welding in a state where the pivot bracket cylindrical body 833 is disposed so as to penetrate the pivot bracket outer portion 831 and the pivot bracket inner portion 832 on the front side of the lower portion of the upper frame 12. A second pivot shaft 61 of the link mechanism 51 is penetrated into the inside of the pivot bracket cylindrical body 833, which will be later described.

As described above, the sub-bracket 86 is disposed on the left side of the vehicle body as shown in Figs. 2 and 3. The sub-bracket 86 connects the rear side of the lower portion of the left upper frame 12 and the lower side of the front portion of the left rear frame 15.

As shown in Fig. 3, the sub-bracket 86 is mainly made up of plate members, is partially open toward the rear side and is open toward the lower side. The upper side portion of a connecting rod 54 of the link mechanism 51 is disposed inside the sub-bracket 86.

The sub-bracket 86 has a sub-bracket outer portion 861, a sub-bracket inner portion 862 and a sub-bracket intermediate portion 863. An upper side mounting hole portion 864 and a lower side mounting hole portion 865 are formed on the sub-bracket outer portion 861 and the sub-bracket inner portion 862. A cutout 866 is formed on the sub-bracket inner portion 862.

The sub-bracket outer portion 861 is disposed on the laterally outer side of the sub-bracket 86. The sub-bracket inner portion 862 is disposed on the laterally inner side of the sub-bracket 86.

The sub-bracket outer portion 861 and the sub-bracket inner portion 862 are disposed laterally opposed to each other, and laterally sandwich the rear side of the lower portion of the left upper frame 12 and the lower side of the front portion of the left rear frame 15. The upper side portion of the sub-bracket 86 is formed such that the sub-bracket outer portion 861 and the sub-bracket inner portion 862 are jointed with each other by welding.

The sub-bracket intermediate portion 863 extends laterally. The sub-bracket intermediate portion 863 faces the rear side, and continuously connects the upper side of the sub-bracket outer portion 861 and the sub-bracket inner portion 862 in the lateral direction so as to close up the substantially middle portion in the vertical direction of the opening on the rear side of the sub-bracket 86. The sub-bracket 86 is open toward the rear side on the upper side as well as on the lower side across the sub-bracket intermediate portion 863.

The sub-bracket outer portion 861 and the sub-bracket inner portion 862 are jointed to the left upper frame 12 by being welded at a front joint portion 86b on the rear side of the lower portion of the left upper frame 12 along the direction in which the upper frame 12 extends. The sub-bracket outer portion 861 and the sub-bracket inner portion 862 are jointed to the left rear frame 15 by being welded at an upper joint portion 86a along the direction in which the left rear frame 15 extends.

The upper side mounting hole portions 864 and the lower side mounting hole portions 865 are provided on the sub-bracket outer portion 861 and the sub-bracket inner portion 862, respectively. The upper side mounting hole portions 864 are provided on the upper sides of the sub-bracket 86. The lower side mounting hole portions 865 are provided on the lower sides of the sub-bracket 86. The upper side mounting hole portions 864 and the lower side mounting hole portions 865 penetrate the sub-bracket 86 in the lateral direction, respectively.

The cutout 866 is formed on the lower portion of the sub-bracket inner portion 862. The cutout 866 is open downwardly, and is formed so as to be recessed from the lower side edge of the sub-bracket inner portion 862 toward the upper side. As shown in Fig. 5, the cutout 866 has a front edge portion 866a, a rear edge portion 866b and an upper edge portion 866c. A projection 541 of the connecting rod 54, which will be described later, is disposed in the cutout 866.

As shown in Figs. 2 and 4, the link mechanism 51 includes the first links 52, a second link 53, the connecting rod 54, the first pivot shaft 55, the second pivot shaft 61, a third pivot shaft 62, a fourth pivot shaft 63 and an intermediate shaft 64. The swing unit 40 is swingable centring on the first pivot shaft 55.

The first links 52 are provided as a left and right pair. The first links 52 extend substantially in the vertical direction. The upper side portions of the first links 52 are disposed inside the pivot brackets 83.

The upper end portions of the first links 52 are rotatably supported on the pivot brackets 83 via the second pivot shaft 61. As shown in Fig. 4, the second pivot shaft 61 extends laterally, and supports the upper end portions of the left and right first links 52 at the portion inside both end portions. The second pivot shaft 61 is rotatably supported on both sides thereof by the pivot bracket cylindrical bodies 833 (see Fig. 3) of the pivot brackets 83.

The lower end portions of the first links 52 are rotatably supported on the front end portions of the second links 53 via the third pivot shaft 62. The third pivot shaft 62 extends laterally, supports the lower end portions of the left and right first links 52 at both end portions, and supports the front end portions of the left and right second links 53.

The second links 53 are provided as a left and right pair. The second links 53 extend substantially in the longitudinal direction.

The front end portion of each of the second links 53 is rotatably supported on the lower end portion of each of the first link 52 via the third pivot shaft 62. The rear end portion of the second link 53 is supported on the rear end portion of the swing unit 40 via the first pivot shaft 55, and is rotatably supported on the lower end portion of the connecting rod 54. The first pivot shaft 55 extends laterally, and supports the rear end portions of inner arm members 531 of the second links 53 on both end portion sides. The first pivot shaft 55 supports the lower end portion of the connecting rod 54 and is connected to the rear end portion of the swing unit 40 on the left end portion.

The connecting rod 54 is provided only on the left side of the vehicle body. The connecting rod 54 extends substantially in the vertical direction. The upper side portion of the connecting rod 54 is disposed inside the sub-bracket 86.

The upper end portion (corresponding to the rear end) of the connecting rod 54 is rotatably supported on the upper end portion of the sub-bracket 86 via the fourth pivot shaft 63. The fourth pivot shaft 63 extends laterally and is rotatably supported by the upper side mounting hole portion 864 (see Fig. 3) of the sub-bracket 86.

The lower end portion of the connecting rod 54 is connected to one end of the swing unit 40 via the first pivot shaft 55 and is rotatably supported on the rear end portion of the second link 53.

The substantially middle portion of the connecting rod 54 is swingably connected to the lower end portion of the sub-bracket 86 in the longitudinal direction of the vehicle body via the intermediate shaft 64. The intermediate shaft 64 extends laterally and is connected to the lower side mounting hole portions 865 of the sub-bracket outer portion 861 and the sub-bracket inner portion 862. More specifically, the intermediate shaft 64 is disposed so as to penetrate the lower side mounting hole portions 865. A rubber member (not shown) is disposed between the intermediate shaft 64 and the lower side mounting hole portions 865. The intermediate shaft 64 is swingable in the longitudinal direction while deforming the rubber member.

In the link mechanism 51 which is configured in this manner, the second link 53 extends longitudinally, and moves in the axial direction centring on the pivot bracket cylindrical body 833 of the pivot bracket 83 via the first link 52. The rear end portion of the second link 53 is connected to the swing unit 40 via the first pivot shaft 55. Therefore, the second link 53 allows the swing unit 40 to move in the longitudinal direction.

Additionally, the first link 52 and the connecting rod 54 are disposed so as to be substantially parallel to each other, and constitute the link mechanism 51. The lower end portion of the connecting rod 54 is connected to the swing unit 40 via the first pivot shaft 55. Therefore, the first link 52 and the connecting rod 54 allow the swing unit 40 to move in the longitudinal direction.

Further, the link mechanism 51 has the projection 541 as shown in Figs. 2 and 5. The projection 541 projects upward at the inner surface of the connecting rod 54, and is inserted into the cutout 866 of the sub-bracket 86. The cutout 866 of the sub-bracket 86 restricts the motion in the longitudinal direction of projection 541 of the link mechanism 51, which thereby restricts the motion in the longitudinal direction of the swing unit 40.

More specifically, in case where the swing unit 40 moves longitudinally, the motion in the longitudinal direction of the link mechanism 51 is restricted with respect to the sub-bracket 86 due to the fact that the projection 541 of the link mechanism 51 abuts on the front edge portion 866a and the rear edge portion 866b. As a result, the motion in the longitudinal direction of the swing unit 40 is restricted.

In the frame structure 30 which is configured as above according to the embodiment of the present invention, when the impact load is imposed on the rear wheel 25 from the road surface, the seat rails 16 receive the impact load, which is transferred to the body frame 10 via the rear cushion 26, via the upper end support brackets 87 and the cross pipes 32, 33. Additionally, in the frame structure 30 according to the embodiment of the present invention, when the impact load is imposed on the rear wheel 25 from the road surface, the body frame 10 receives the impact load, which is transferred to the body frame 10 via the link mechanism 51, via the pivot brackets 83 and the sub-bracket 86.

According to the frame structure 30 of the motorcycle 1 of the above-described embodiment of the present invention, for example, the effects can be obtained as described below.

The pivot bracket 83 supporting the swing unit 40 is jointed to the front of the upper frame 12 along the direction in which the upper frame 12 extends. Accordingly, it is possible to increase the size of the jointed area between the pivot bracket 83 and the upper frame 12. By such constitution, it is possible to ensure the rigidity of the pivot bracket 83 without increasing the size of the frame and the pivot bracket 83, which thereby can suppress the increase in weight of the body frame 10 while ensuring the rigidity of the body frame 10.

The rear frames 15 are jointed on the rear side portions of the lower portions of the upper frames 12 to which the pivot brackets 83 are connected. Therefore, it is possible to further enhance the rigidity of the lower portions of the upper frames 12, which is increased by the pivot brackets 83. By such constitution, it is possible to further enhance the rigidity of the body frame 10.

The sub-bracket 86 is jointed to the upper frame 12 along the direction in which the upper frame 12 extends and is jointed to the rear frame 15 along the direction in which the rear frame 15 extends. Accordingly, it is possible to increase the size of the jointed area between the sub-bracket 86 and the upper frame 12 and also to increase the size of the jointed area between the sub-bracket 86 and the rear frame 15. Consequently, it is possible to further enhance the rigidity of the body frame 10.

The link mechanism 51 which restricts the motion in the longitudinal direction of the swing unit 40 supported by the sub-bracket 86 is further provided. By such configuration, it is possible to restrict the motion in the longitudinal direction of the swing unit 40 by using the sub-bracket 86.

Having thus described the preferred embodiment of the present invention, the present invention is not limited to the above-described embodiment, but various other embodiments may be applied.

For example, in the above embodiment of the present invention, the motorcycle travels by having the rear wheel rotationally driven by the power generated in an internal combustion engine; however, the present invention is not limited to the above-described embodiment. The present invention may equally be applied to electric motorcycles which travel by having the rear wheel rotationally driven only by the power generated in an electric motor. In addition, the present invention may be applied to hybrid saddle-ride type vehicles which travel by having the rear wheel rotationally driven in such a way to combine two powers; the power generated in an engine and power generated in an electric motor.

Further, the present invention is not limited to saddle-ride type vehicles of scooter type, but may be applied to saddle-ride type vehicles of motorcycle type or cub type. Furthermore, the present invention is also applicable to three-wheeled or four-wheeled saddle-ride type vehicles (where saddle-ride type vehicles include vehicles in general on which passengers ride in such a way to straddle the vehicle body thereof).

## Claims

1. A frame structure of a saddle-ride type vehicle comprising:
a head pipe (11);
upper frames (12) which extend rearward and downward from said head pipe (11);
down frames (13) which are disposed below said upper frames (12) and extend rearward and downward from said head pipe (11);
under frames (14) which extend rearward from the lower end of said down frames (13);
rear frames (15) which extend rearward and upward from the lower portion of said upper frames (12); and
a swing unit (40) which has a power unit (45) for generating a driving force and rotatably holds a rear wheel (25);
**characterized in that** the frame structure further comprises pivot brackets (83) which connect the lower portion of said upper frames (12) and the rear portion of said under frames (14), **in that** said pivot brackets (83) are joined to the forward surface of said upper frames (12) along the direction in which said upper frames (12) extend, **in that** each pivot bracket (83) includes a pivot bracket outer portion (831) and a pivot bracket inner portion (832) which are jointed to the under frame (14) by being welded with a front joint portion (83b) along the circumferential direction of the under frame (14) at the rear portion of the under frame (14), and **in that** said that swing unit (40) is swingably supported by said pivot brackets (83).

2. The frame structure of the saddle-ride type vehicle according to Claim 1, wherein said rear frames (15) are joined to the rear sides of the lower portions of said upper frames (12) to which said pivot brackets (83) are connected.

3. The frame structure of the saddle-ride type vehicle according to Claim 1 or Claim 2, wherein a sub-bracket (86) for connecting the rearward surface of the lower portion of one said upper frame (12) and the lower surface of the front portion of one said rear frame (15) is further provided; and
said sub-bracket (86) is joined to said one upper frame (12) along the direction in which said one upper frame (12) extends and is joined to said one rear frame (15) along the direction in which said one rear frame (15) extends.

4. The frame structure (50) of the saddle-ride type vehicle (1) according to claim 3, further comprising a link member (51), one end of which is supported by said swing unit (40) and the other end of which is supported by said sub-bracket (86) and restricts the motion in the longitudinal direction of said swing unit (40).

## Patentansprüche

1. Rahmenstruktur für ein Fahrzeug vom Typ, das im Sattel gefahren wird, die umfasst:
ein Lenkkopfrohr (11);
obere Rahmen (12), die sich von dem Lenkkopfrohr (11) aus nach hinten und nach unten erstrecken;
untere Rahmen (13), die unter den oberen Rahmen (12) angeordnet sind und sich von dem Lenkkopfrohr (11) aus nach hinten und nach unten erstrecken;
Unterrahmen (14), die sich von dem unteren Ende der unteren Rahmen (13) nach hinten erstrecken;
Hinterrahmen (15), die sich von dem unteren Abschnitt der oberen Rahmen (12) nach hinten und nach oben erstrecken; und
eine Schwingeinheit (40), die eine Leistungseinheit (45) zum Erzeugen einer Antriebskraft aufweist und drehbar ein Hinterrad (25) hält;
**dadurch gekennzeichnet, dass** die Rahmenstruktur ferner Schwenkträger (83) umfasst, die den unteren Abschnitt der oberen Rahmen (12) und den hinteren Abschnitt der Unterrahmen (14) verbinden, dass die Schwenkträger (83) mit der vorderen Oberfläche der oberen Rahmen (12) entlang der Richtung verbunden sind, in der sich die oberen Rahmen (12) erstrecken, dass jeder Schwenkträger (83) einen äußeren Abschnitt des Schwenkträgers (831) und einen inneren Abschnitt des Schwenkträgers (832) enthält, die mit dem Unterrahmen (14) dadurch zusammengefügt sind, indem sie mit einem vorderen gemeinsamen Verbindungsabschnitt (83b) entlang der Umfangsrichtung des Unterrahmens (14) an dem hinteren Abschnitt des Unterrahmens (14) verschweißt sind, und dass die Schwingeinheit (40) durch die Schwenkträger (83) schwenkbar getragen wird.

2. Rahmenstruktur für das Fahrzeug vom Typ, das im Sattel gefahren wird, nach Anspruch 1, wobei die Hinterrahmen (15) mit den Rückseiten der unteren Abschnitte der oberen Rahmen (12), mit denen die Schwenkträger (83) verbunden sind, verbunden sind.

3. Rahmenstruktur für das Fahrzeug vom Typ, das im Sattel gefahren wird, nach Anspruch 1 oder 2, wobei ferner ein Unterträger (86) bereitgestellt ist, um die rückwärtige Oberfläche des unteren Abschnitts von einem des oberen Rahmens (12) und die untere Oberfläche des vorderen Abschnitts von einem des Hinterrahmens (15) zu verbinden; und
wobei der Unterträger (86) mit dem einen oberen Rahmen (12) entlang der Richtung, in der sich der eine obere Rahmen (12) erstreckt, verbunden ist und mit dem einen Hinterrahmen (15) entlang der Richtung, in der sich der eine Hinterrahmen (15) erstreckt, verbunden ist.

4. Rahmenstruktur (50) für das Fahrzeug (1) vom Typ, das im Sattel gefahren wird, nach Anspruch 3, die ferner ein Verbindungselement (51) umfasst, dessen eines Ende von der Schwingeinheit (40) getragen wird und dessen anderes Ende von dem Unterträger (86) getragen wird und das die Bewegung in der Längsrichtung der Schwingeinheit (40) beschränkt.

## Revendications

1. Structure de cadre d'un véhicule du type à selle comprenant :
un tuyau de tête (11) ;
des cadres supérieurs (12) qui s'étendent vers l'arrière et vers le bas dudit tuyau de tête (11) ;
des cadres descendants (13) qui sont disposés en dessous desdits cadres supérieurs (12) et s'étendent vers l'arrière et vers le bas dudit tuyau de tête (11) ;
des cadres inférieurs (14) qui s'étendent vers l'arrière depuis l'extrémité inférieure desdits cadres descendants (13) ;
des cadres arrière (15) qui s'étendent vers l'arrière et vers le haut depuis la partie inférieure desdits cadres supérieurs (12) ; et
une unité oscillante (40) qui a une unité motrice (45) pour générer une force d'entraînement et soutient en rotation une roue arrière (25),
**caractérisée en ce que** la structure de cadre comprend en outre des potences de pivotement (83) qui raccordent la partie inférieure desdits cadres supérieurs (12) et la partie arrière desdits cadres inférieurs (14), lesdites potences de pivotement (83) sont jointes à la surface avant desdits cadres supérieurs (12) dans la direction dans laquelle lesdits cadres supérieurs (12) s'étendent, chaque potence de pivotement (83) comprend une partie extérieure de potence de pivotement (831) et une partie intérieure de potence de pivotement (832) qui sont jointes au cadre inférieur (14) par soudure avec une partie de jonction avant (83b) dans la direction circonférentielle du cadre inférieur (14) sur la partie arrière du cadre inférieur (14) et ladite unité oscillante (40) est supportée en mode oscillant par lesdites potences de pivotement (83).

2. Structure de cadre du véhicule du type à selle selon la revendication 1, dans laquelle desdits cadres arrière (15) sont joints aux côtés arrière des parties inférieures desdits cadres supérieurs (12) auxquels lesdites potences de pivotement (83) sont raccordées.

3. Structure de cadre du véhicule du type à selle selon la revendication 1 ou la revendication 2, dans laquelle une sous-potence (86) pour raccorder la surface arrière de la partie inférieure d'un dit cadre supérieur (12) et la surface inférieure de la partie avant d'un dit cadre arrière (15) est en outre prévue ; et
ladite sous-potence (86) est jointe audit un cadre supérieur (12) dans la direction dans laquelle ledit un cadre supérieur (12) s'étend et est jointe audit un cadre arrière (15) dans la direction dans laquelle ledit un cadre arrière (15) s'étend.

4. Structure de cadre (50) du véhicule du type à selle (1) selon la revendication 3, comprenant un élément de liaison (51) dont une extrémité est supportée par ladite unité oscillante (40) et dont l'autre extrémité est supportée par ladite sous-potence (86) et restreint le mouvement dans la direction longitudinale de ladite unité oscillante (40).
